# EUROPEAN PATENT APPLICATION

(11) **EP 4 517 943 A2**
(43) Date of publication of application: **05.03.2025**
(21) Application number: 24195742.2
(22) Date of filing: 21.08.2024
(51) Int. Cl.: H01M 50/103, H01M 50/176, H01M 50/55, H01M 50/553, H01M 50/586, H01M 50/591, H01M 50/593, H01M 50/627

(54) **BATTERY CELL AND MANUFACTURING METHOD OF THE SAME**

(30) Priority: 01.09.2023 KR 20230115918; 22.04.2024 KR 20240053472
(71) Applicant: SK On Co., Ltd., Seoul 03161 (KR)
(72) Inventor: CHOI, Seung Won, 34124 Daejeon (KR); BYUN, Jae Gyu, 34124 Daejeon (KR)
(74) Representative: Prüfer & Partner mbB Patentanwälte · Rechtsanwälte

(57) **Abstract**

A battery cell according to the present disclosure includes: an electrode assembly including a first electrode and a second electrode having a potential different from the first electrode; an accommodating body including an opening formed by opening one surface and accommodating the electrode assembly therein; an accommodating cover coupled with the opening to cover the electrode assembly; a lead portion formed at one end of each of the first electrode and the second electrode to electrically connect the electrode assembly to the outside; a lead blocking portion positioned between the electrode assembly and the accommodating body and blocking contact between the lead portion and the accommodating body; and an insulating member covering the outside of the electrode assembly.

## Description

### BACKGROUND OF THE INVENTION

### 1. Field

The present disclosure relates to a battery cell and a manufacturing method of the same.

### 2. Description of the Related Art

A secondary battery is a battery that is made to convert electrical energy into chemical energy and store it so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharge. In addition, the opposite process of this phenomenon is referred to as charging.

An electrode assembly including a cathode and an anode may be manufactured by being accommodated in a case and then injecting an electrolyte into the case. At this time, when the electrode assembly and the case are not electrically insulated, a fire or explosion may occur due to short circuit by the case. Therefore, research is actively being conducted to efficiently insulate an electrode assembly from a case after the electrode assembly is accommodated in the case.

### SUMMARY OF THE INVENTION

A problem that the present disclosure aims to solve is to improve the stability of a battery cell by blocking the possibility of contact between an electrode assembly and a case.

In addition, another problem that the present disclosure aims to solve is to improve battery cell production efficiency by improving assemblability of battery cells.

In addition, the battery cell of the present disclosure can be widely applied in the field of green technology, such as electric vehicles, battery charging stations, solar power generation, and wind power generation using batteries.

In addition, the battery cell of the present disclosure can be used in eco-friendly electric vehicles, hybrid vehicles, etc. to prevent climate change by suppressing air pollution and greenhouse gas emissions.

A battery cell according to the present disclosure includes: an electrode assembly including a first electrode and a second electrode having a potential different from the first electrode; an accommodating body including an opening formed by opening one surface and accommodating the electrode assembly therein; an accommodating cover coupled with the opening to cover the electrode assembly; a lead portion formed at one end of each of the first electrode and the second electrode to electrically connect the electrode assembly to the outside; a lead blocking portion positioned between the electrode assembly and the accommodating body and blocking contact between the lead portion and the accommodating body; and an insulating member covering the outside of the electrode assembly.

The electrode assembly may include: an upper surface facing the opening; a bottom surface formed at a position opposite to the upper surface; a first surface and a second surface facing in a direction in which the lead portion protrudes between the upper surface and the bottom surface; and a third surface and a fourth surface between the first surface and the second surface.

The lead portion may protrude from each of the first surface and the second surface.

The lead blocking portion may be positioned between the first surface and the accommodating body and between the second surface and the accommodating body.

The lead blocking portion may include a through-hole formed by penetrating along a direction in which the lead portion protrudes from the electrode assembly.

The through-hole may be formed at a position corresponding to the lead portion.

The thickness of the lead portion along the direction in which the lead portion protrudes from the electrode assembly may be greater than or equal to the length of the lead portion.

The lead blocking portion may be formed of an insulating material.

The insulating member may cover the third surface, the fourth surface, and the bottom surface.

The insulating member may cover the outside of the lead blocking portion positioned on each of the first surface and the second surface.

The insulating member may be formed of an insulating material.

A manufacturing method of a battery cell according to the present disclosure includes: allowing the accommodating cover to cover one surface of the electrode assembly and connecting the lead portion to the accommodating cover; covering the lead portion and connecting the lead blocking portion to the accommodating cover; covering the outside of the electrode assembly with an insulating member; and inserting the electrode assembly connected to the accommodating cover into the accommodating body through the opening.

The covering the outside of the electrode assembly with an insulating member may include: disposing an electrode assembly on an insulating member; and folding the insulating member along a direction perpendicular to the direction in which the lead portion protrudes from the electrode assembly.

The folding the insulating member may include: folding a first region and a second region of the insulating member, each positioned on both sides of a bottom region of the insulating member in contact with the bottom surface of the electrode assembly, along a direction perpendicular to the direction in which the lead portion protrudes; folding upward a third region in the bottom region of the insulating member positioned outside the electrode assembly along a direction in which the lead portion protrudes from the electrode assembly; and folding each of a part of the first region and a part of the second region in the direction in which the lead blocking portion is positioned.

The manufacturing method may further include injecting an electrolyte into the accommodating body through an injection hole penetrating the accommodating cover.

According to one embodiment of the present disclosure, the stability of a battery cell can be improved by blocking the possibility of contact between an electrode assembly and a case

In addition, battery cell production efficiency can be improved by improving assemblability of battery cells.

### BRIEF DESCRIPTION OF THE DRAWINGS

FIG. 1 shows a battery cell according to one embodiment of the present disclosure.
FIGS. 2 and 3 show an electrode assembly and an accommodating cover according to one embodiment of the present disclosure.
FIG. 4 shows a lead blocking portion coupled with an electrode assembly according to one embodiment of the present disclosure.
FIG. 5 shows a front view of an electrode assembly according to one embodiment of the present disclosure.
FIG. 6 shows a side view of an electrode assembly according to one embodiment of the present disclosure.
FIG. 7 shows inserting an electrode assembly into an accommodating body according to one embodiment of the present disclosure.
FIG. 8 shows an insulating member according to one embodiment of the present disclosure.
FIGS. 9 and 10 show flowcharts of a manufacturing method of a battery cell according to one embodiment of the present disclosure.
FIGS. 11 to 13 schematically show an insulating member covering an electrode assembly according to one embodiment of the present disclosure.

### DETAILED DESCRIPTION

Hereinafter, the present disclosure will be described in detail with reference to the attached drawings. However, this is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in the present specification, singular expressions include plural expressions unless the context clearly dictates otherwise.

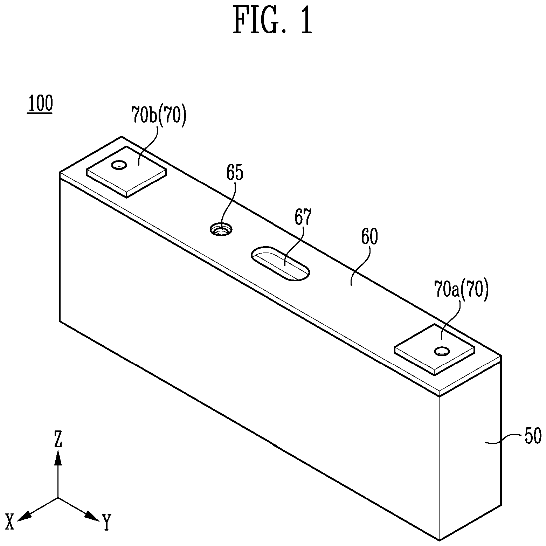

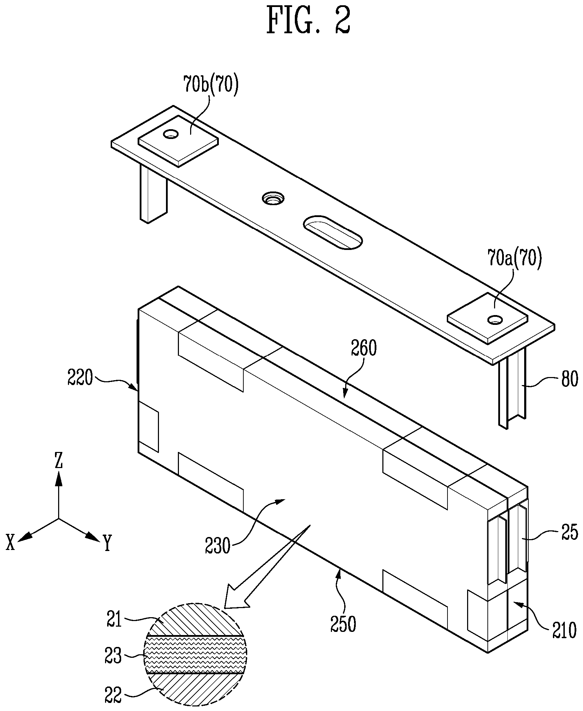

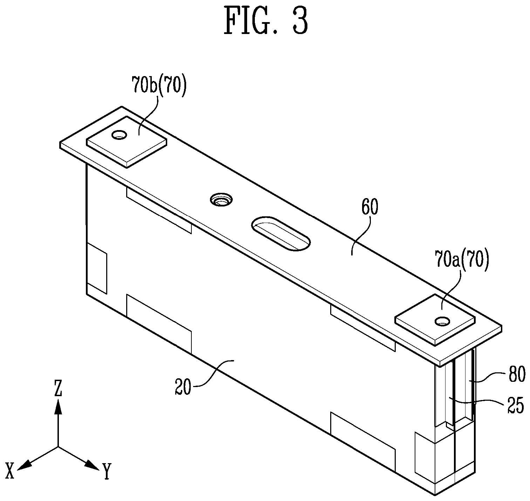

FIG. 1 shows a battery cell 100 according to one embodiment of the present disclosure, and FIGS. 2 and 3 show an electrode assembly 20 and an accommodating cover 60 according to one embodiment of the present disclosure.

A battery cell 100 according to the present disclosure includes: an electrode assembly 20 including a first electrode 21 and a second electrode 22 having a potential different from the first electrode 21; an accommodating body 50 including an opening 55 formed by opening one surface and accommodating the electrode assembly 20 therein; an accommodating cover 60 coupled with the opening 55 to cover the electrode assembly 20; a lead portion 25 formed at one end of each of the first electrode 21 and the second electrode 22 to electrically connect the electrode assembly 20 to the outside; a lead blocking portion 30 positioned between the electrode assembly 20 and the accommodating body 50 and blocking contact between the lead portion 25 and the accommodating body 50; and an insulating member 40 covering the outside of the electrode assembly 20.

A battery cell 100 may be a secondary battery that may be used repeatedly by charging and discharging electrical energy. For example, it may refer to a lithium secondary battery or a lithium ion battery, but it is not limited thereto. As another example, it may mean an all-solid-state battery.

Battery cells 100 may be classified into a pouch-type secondary battery, a prismatic secondary battery, or a cylindrical secondary battery depending on the shape. Referring to FIG. 1, a prismatic secondary battery is illustrated in the present specification as an example for convenience of explanation, but the present invention is not limited thereto.

A battery cell 100 may include an electrode assembly 20. An electrode assembly 20 may include a first electrode 21 and a second electrode 22 having a potential different from the first electrode 21. In an embodiment, a first electrode 21 may be a cathode and a second electrode 22 may be an anode. Alternatively, a first electrode 21 may be an anode and a second electrode 22 may be cathode.

An electrode assembly 20 may convert chemical energy into electrical energy through a redox reaction of a first electrode 21 and a second electrode 22.

In an embodiment, a first electrode 21, a second electrode 22, and a separator 23 may be stacked to form an electrode assembly 20. Electrode assemblies 20 may be classified into stacking type, winding type, stack-folding type, and Z-stacking type according to the manner in which a cathode, an anode, and a separator 23 are stacked. A battery cell 100 of the present disclosure is not limited to any one stacking method and may include electrode assemblies 20 stacked in various manners.

A battery cell 100 may further include a separator 23. A separator 23 may be positioned between a first electrode 21 and a second electrode 22 to block contact between the first electrode 21 and the second electrode 22. The type of a separator 23 is not particularly limited, but it may include a porous polymer film. For example, a separator 23 may include a porous polymer film or a porous non-woven fabric.

Referring to FIG. 2, a separator 23 may be positioned between a first electrode 21 and a second electrode 22. Through this, it is possible to prevent a first electrode 21 and a second electrode 22 from contacting each other and prevent a short circuit.

A battery cell 100 may further include an electrolyte. An electrolyte may be a medium that transfers ions or a current between a first electrode 21 and a second electrode 22. An electrolyte may be a non-aqueous electrolyte solution. An electrolyte solution may include a lithium salt and an organic solvent.

A battery cell 100 may further include an accommodating housing. An accommodating housing may accommodate an electrode assembly 20 therein. In addition, an accommodating housing may further accommodate an electrolyte therein. In other words, a battery cell 100 may accommodate an electrode assembly 20 and an electrolyte inside an accommodating housing.

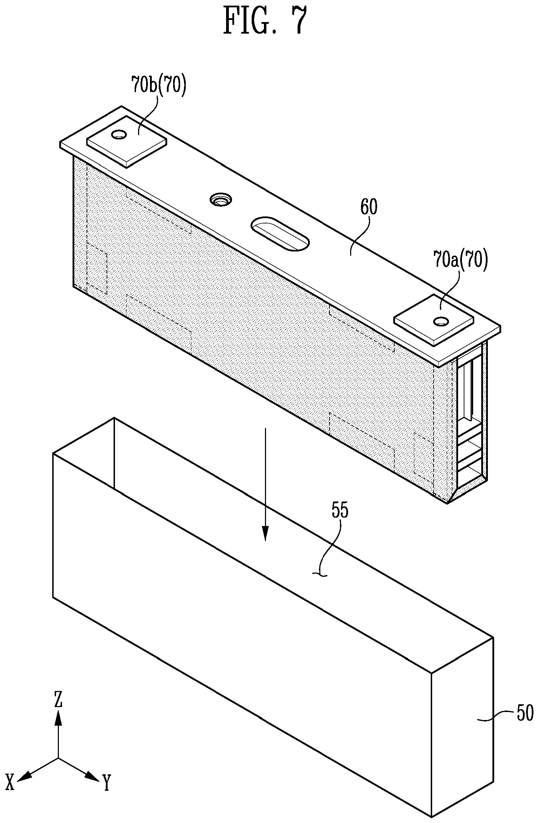

An accommodating housing may include an accommodating body 50 and an accommodating cover 60. An accommodating body 50 may include an opening (55 in FIG. 7) formed by opening one surface and may accommodate an electrode assembly 20 therein. An electrode assembly 20 may be accommodated in the inside through an opening 55. The structure of an accommodating body 50 will be described in detail with reference to FIG. 7 below.

An accommodating cover 60 may be coupled with an opening 55 of an accommodating housing to cover an electrode assembly 20. An accommodating cover 60 may be coupled with an opening 55 to close the opening 55. By closing an opening 55, an electrolyte and an electrode assembly 20 may be stably accommodated inside an accommodating housing.

Referring to FIG. 2, an accommodating cover 60 may further include an injection hole 65 and a venting portion 67. An electrolyte may be injected into an accommodating housing through an injection hole 65.

In an embodiment, after the accommodating cover 60 is coupled with an opening 55 of the accommodating body 50 to close the opening 55, an electrolyte solution may injected into the accommodating body 50 through an injection hole 65 of the accommodating cover 60.

An injection hole 65 may be formed through an accommodating cover 60. Through this, an electrolyte may be injected from the outside of an accommodating housing to the inside of the accommodating housing.

A venting portion 67 may control the pressure inside an accommodating housing. When charging and discharging are repeatedly conducted, the internal pressure of an accommodating housing may increase. When the internal pressure increases, a battery cell 100 may explode, so it is necessary to control the internal pressure.

A venting portion 67 may be opened when the pressure inside an accommodating housing rises above a preset condition. A venting portion 67 may be opened to form a passage through which a gas may move. A gas may be discharged from the inside of an accommodating housing to the outside of an accommodating housing through a passage. In an embodiment, the venting portion 67 may be a notch.

Meanwhile, a battery cell 100 includes a lead portion 25 formed at one end of each of a first electrode 21 and a second electrode 22 to electrically connect an electrode assembly 20 to the outside.

A lead portion 25 may be formed at one end of a first electrode 21. In addition, a lead portion 25 may be formed at one end of a second electrode 22. A lead portion 25 may include a first lead portion 251 formed at one end of a first electrode 21 and a second lead portion 252 formed at one end of a second electrode 22.

In an embodiment, when a first electrode 21 is a cathode and a second electrode 22 is an anode, a first lead portion 251 may electrically connect the cathode to the outside, and a second lead portion 252 may electrically connect the anode to the outside.

Regarding the structure of a first electrode 21, a first electrode 21 and a second electrode 22 may each include a current collector. A current collector may include any known conductive material as long as it does not cause a chemical reaction within a battery cell 100. For example, a current collector may include any one of stainless steel, nickel (Ni), aluminum (Al), titanium (Ti), copper (Cu), and alloys thereof, and may be provided in various forms such as films, sheets, and foils. In an embodiment, a current collector used in a first electrode 21 may be made of aluminum, and a current collector used in a second electrode 22 may be made of copper.

A first electrode 21 and a second electrode 22 each may further include an active material, and an active material may be applied on a current collector. An active material may be a material which lithium ions may be inserted to and extracted from.

In an embodiment, an active material used in a first electrode 21 may be an lithium metal oxide, and an active material used in a second electrode 22 may be any one of a carbon-based material such as crystalline carbon, amorphous carbon, carbon composite, and carbon fiber, a lithium alloy, silicon (Si), and tin (Sn).

A current collector of a first electrode 21 may include a region where an active material is applied and a region where an active material is not applied. A region on a current collector of a first electrode 21 where an active material is not applied may be referred to as an uncoated portion. A lead portion 25 may include an uncoated portion.

A battery cell 100 may include a plurality of electrodes. In other words, a plurality of first electrodes 21 and a plurality of second electrodes 22 may be stacked. Each of a plurality of first electrodes 21 may include an uncoated portion. Likewise, each of the plurality of second electrodes 22 may include an uncoated portion.

A lead portion 25 may include uncoated portions of a plurality of first electrodes 21. The uncoated portions of the plurality of first electrodes 21 may be connected to each other to form a first lead portion 251. Through this, a first lead portion 251 may electrically connect a plurality of first electrodes 21 to the outside.

A lead portion 25 may include uncoated portions of a plurality of second electrodes 22. The uncoated portions of the plurality of second electrodes 22 may be connected to each other to form a second lead portion 252. Through this, a second lead portion 252 may electrically connect a plurality of second electrodes 22 to the outside.

Referring to FIGS. 2 and 3, a first lead portion 251 may be formed to protrude from one side of an electrode assembly 20 along the Y-axis direction. Although a second lead portion 252 is not illustrated in the drawings, it may be formed on the opposite side of a first lead portion 251 along the Y-axis direction.

Meanwhile, a battery cell 100 may further include a current collecting plate 80. A current collecting plate 80 may electrically connect a tab portion 70 and a lead portion 25. A tab portion 70 may be formed on the outside of an accommodating housing and connected to an external device.

A tab portion 70 may include a first tab portion 70a connected to a first electrode 21 and a second tab portion 70b connected to an anode. More specifically, a first tab portion 70a may be connected to a first lead portion 251. A second tab portion 70b may be connected to a second lead portion 252.

A current collecting plate 80 may be in contact with each of a lead portion 25 and a tab portion 70 and may electrically connect each other. To this end, a current collecting plate 80 may be formed of an electrically conductive material.

Referring to FIGS. 2 and 3, a first tab portion 70a and a second tab portion 70b may each be formed at an accommodating cover 60. In addition, when an accommodating cover 60 covers one surface of an electrode assembly 20, a current collector plate 80 may be in contact with each of lead portions 25. Through this, a first electrode 21 and a second electrode 22 may be electrically connected to a first tab portion 70a and a second tab portion 70b, respectively.

An electrode assembly 20 may include: an upper surface 260 facing the opening 55; a bottom surface 250 formed at a position opposite to the upper surface 260; a first surface 210 and a second surface 220 facing in a direction in which the lead portion 25 protrudes between the upper surface 260 and the bottom surface 250; and a third surface 230 and a fourth surface 240 between the first surface 210 and the second surface 220.

An electrode assembly 20 may include an upper surface 260 that faces an opening 55 and is covered by an accommodating cover 60. In addition, an electrode assembly 20 may include a bottom surface 250 formed at a position opposite to an upper surface 260 to form a bottom. An upper surface 260 and a bottom surface 250 may be formed to be parallel to each other.

Referring to FIG. 2, an upper surface 260 may refer to a surface of an electrode assembly 20 facing the +Z-axis direction, and a bottom surface 250 may refer to a surface of the electrode assembly 20 facing the -Z-axis direction.

A first surface 210, a second surface 220, a third surface 230, and a fourth surface 240 may be formed between an upper surface 260 and a bottom surface 250. A first surface 210, a second surface 220, a third surface 230, and a fourth surface 240 may be formed in a direction perpendicular to an upper surface 260 and a bottom surface 250. In addition, a first surface 210, a second surface 220, a third surface 230, and a fourth surface 240 may be formed in directions perpendicular to each other.

As described above, a lead portion 25 may be formed at one end of each of a first electrode 21 and a second electrode 22. The lead portion 25 may protrude from each of the first surface 210 and the second surface 220. A first lead portion 251 may be formed at one end of a first electrode 21 and may be formed to protrude from a first surface 210 of the electrode assembly 20. A second lead portion 252 may be formed at one end of a second electrode 22 and may be formed to protrude from a second surface 220 of the electrode assembly 20.

In other words, a first surface 210 and a second surface 220 may refer to opposing surfaces of an electrode assembly 20 on which a lead portion 25 is formed.

A third surface 230 and a fourth surface 240 may be formed between a first surface 210 and a second surface 220. A third side 230 and a fourth side 240 may be formed to be parallel to each other. In addition, a third side 230 and a fourth side 240 may refer to opposite surfaces of an electrode assembly 20.

Referring to FIG. 2, a third surface 230 may refer to a surface of an electrode assembly 20 facing the +X-axis direction, and a fourth surface 240 may refer to a surface of the electrode assembly 20 facing the -X-axis direction.

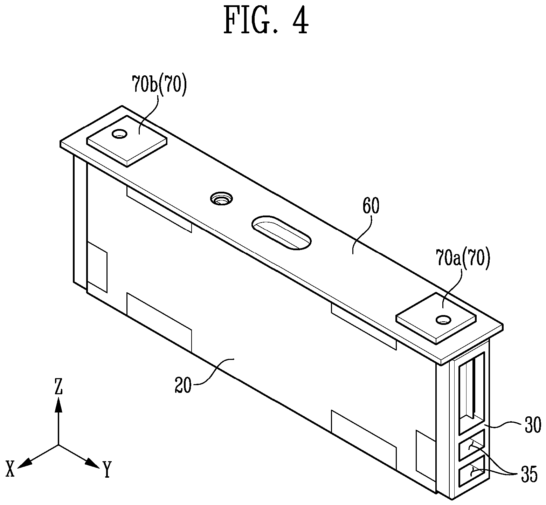

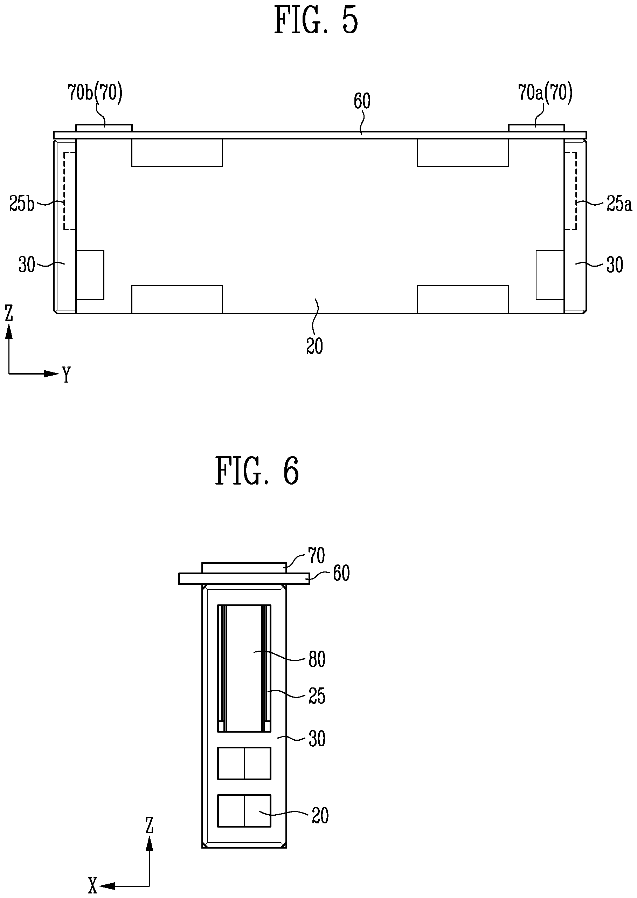

FIG. 4 shows a lead blocking portion 30 coupled with an electrode assembly 20 according to one embodiment of the present disclosure; FIG. 5 shows a front view of an electrode assembly 20 according to one embodiment of the present disclosure; and FIG. 6 shows a side view of an electrode assembly 20 according to one embodiment of the present disclosure.

A lead blocking portion 30 may be positioned between an electrode assembly 20 and an accommodating body 50 and may block contact between a lead portion 25 and an accommodating body 50. In an embodiment, when an accommodating body 50 and a lead portion 25 come into contact, the accommodating body 50 and the lead portion 25 may be electrically connected. For example, when an accommodating body 50 is made of aluminum, it may contact a lead portion 25 so that the accommodating body 50 and the lead portion 25 may be electrically connected.

To prevent an accommodating body 50 and a lead portion 25 from contacting each other, a lead blocking portion 30 may be positioned between an electrode assembly 20 and a lead portion 25. A lead blocking portion 30 may be positioned between an accommodating body 50 and a surface where a lead portion 25 protrudes from an electrode assembly 20.

A lead portion 25 may protrude to the outside of an electrode assembly 20 each on a first surface 210 and a second surface 220. A lead blocking portion 30 may be positioned between a first surface 210 and an accommodating body 50 and between a second surface 220 and an accommodating body 50. A lead blocking portion 30 may be formed of an insulating material. For example, a lead blocking portion 30 may be made of rubber, but is not limited thereto.

Referring to FIG. 4, a lead blocking portion 30 may be coupled with a first surface 210 of an electrode assembly 20. In addition, a lead blocking portion 30 may be coupled with a second surface 220 of an electrode assembly 20.

A lead blocking portion 30 may be coupled with an accommodating cover 60. One end of a lead blocking portion 30 may be coupled with an accommodating cover 60, so that the position of the lead blocking portion 30 may be fixed, and a lead portion 25 may be stably protected.

The lead blocking portion 30 may include a through-hole 35 formed by penetrating along a direction in which the lead portion 25 protrudes from the electrode assembly 20.

When a lead blocking portion 30 covers an electrode assembly 20, the shape of a lead portion 25 needs to be considered. Since a lead portion 25 protrudes, when a lead blocking portion 30 is formed to be flat, the lead blocking portion 30 will protrude in a shape corresponding to the lead portion 25. In this case, the space inside an accommodating housing may not be used efficiently, so the energy density of a battery cell 100 will decrease. In addition, the structural stability of a battery cell 100 may also be reduced.

A lead blocking portion 30 of the present disclosure may include a through-hole 35, and so one end of a lead portion 25 may be inserted into the through-hole 35. In other words, even when a lead portion 25 is inserted into a through-hole 35 and a lead blocking portion 30 is coupled with an electrode assembly 20, the outer surface of a lead blocking portion 30 may not protrude.

A through-hole 35 may be formed at a position corresponding to a lead portion 25. Through this, one end of a lead portion 25 may be inserted into a through-hole 35. In addition, the thickness of a lead portion 25 along the direction in which the lead portion 25 protrudes from an electrode assembly may be greater than or equal to the length of the lead portion 25. In other words, one end of a lead portion 25 inserted into a through-hole 35 will not protrude to the outside of a lead blocking portion 30.

Referring to FIG. 4, a lead portion 25 may include a through-hole 35. A through-hole 35 may be formed by penetrating a lead blocking portion 30 in a direction parallel to the direction in which a lead portion 25 protrudes from an electrode assembly 20. In other words, a through-hole 35 is formed by penetrating a lead blocking portion 30 along the Y-axis direction, and one end of a lead portion 25 may be inserted into the through-hole 35.

Even in this case, one end of the lead portion 25 may not protrude to the outside of the lead blocking portion 30. Referring to FIG. 5, a lead portion 25 may not protrude to the outside of a lead blocking portion 30 along the Y-axis direction.

In addition, an electrolyte may move through a through-hole 35. In an embodiment, an electrolyte may be an electrolyte solution. After an electrode assembly 20 is accommodated in an accommodating body 50, an electrolyte may be injected into the accommodating body 50. An electrolyte may fill up from the bottom of an accommodating body 50 and immerse an electrode assembly 20.

An electrolyte may move from the outside of an electrode assembly 20 toward the inside along a first electrode 21, a second electrode 22, and a separator 23. Meanwhile, an electrolyte moving along a first electrode 21, a second electrode 22, and a separator 23 will move at a slow speed.

In a battery cell 100 of the present disclosure, an electrolyte may move through a through-hole 35 of a lead blocking portion 30. Through this, an electrolyte may be delivered at a high speed to the center of an electrode assembly 20.

Referring to FIG. 6, a through-hole 35 may be formed at a position corresponding to a lead portion 25. A lead portion 25 may be exposed to the outside through a through-hole 35. In addition, an electrolyte may move through a through-hole 35.

A through-hole 35 may extend along the height direction of an electrode assembly 20. In addition, through-holes 35 may be provided in a plural number. The number of through-holes 35 is not particularly limited as long as a lead portion 25 may be inserted and an electrolyte may move therethrough.

FIG. 7 shows inserting an electrode assembly 20 into an accommodating body 50 according to one embodiment of the present disclosure.

A battery cell 100 of the present disclosure includes an insulating member 40 covering the outside of an electrode assembly 20. An insulating member 40 may prevent contact between an electrode assembly 20 and an accommodating housing. Through this, the electrical stability of an electrode assembly 20 may be improved.

Referring to FIG. 7, an opening 55 may be formed to be open on one side of an accommodating body 50. An electrode assembly 20 may be accommodated in an accommodating body 50 through an opening 55. Meanwhile, an electrode assembly 20 may be accommodated in an accommodating body 50 while the electrode assembly is connected to an accommodating cover 60. Therefore, an electrode assembly 20 may be inserted into an accommodating body 50, and an accommodating cover 60 and the accommodating body 50 may be coupled.

An insulating member 40 may be formed of an insulating material. For example, an insulating member 40 may include at least one from the group consisting of polyethylene terephthalate (PET), polyimide (PI), and polypropylene (PP). Without being limited thereto, an insulating member 40 may include a known insulating material.

In addition, an insulating member 40 may have adhesiveness. In an embodiment, an insulating member 40 may be an insulating tape. An insulating member 40 may be easily and stably attached to an electrode assembly 20 while surrounding the outside of the electrode assembly 20.

Contact between a first surface 210 and a second surface 220 of an electrode assembly 20 and an accommodating housing may be prevented by a lead blocking portion 30. At this time, a third side 230 and a fourth side 240 of the electrode assembly 20 will still be in contact with the accommodating housing.

In the battery cell 100 of the present disclosure, an insulating member 40 may cover a third surface 230 and a fourth surface 240 of an electrode assembly 20 to block an electrode assembly 20 from contacting an accommodating housing. In addition, an insulating member 40 may cover a bottom surface 250 of an electrode assembly 20.

In other words, an insulating member 40 may cover the third surface 230, the fourth surface 240, and the bottom surface 250. Through this, an insulating member 40 may prevent an electrode assembly 20 from being electrically connected to an accommodating housing.

Furthermore, an insulating member 40 may cover the outside of a lead blocking portion 30. An insulating member 40 may cover the outside of a lead blocking portion 30 each positioned on a first surface 210 and a second surface 220. Ultimately, an insulating member 40 of the present disclosure may cover a third side 230, a fourth side 240, and a bottom surface 250 and may cover the outside of a lead blocking portion 30 each positioned on a first side 210 and a second side 220.

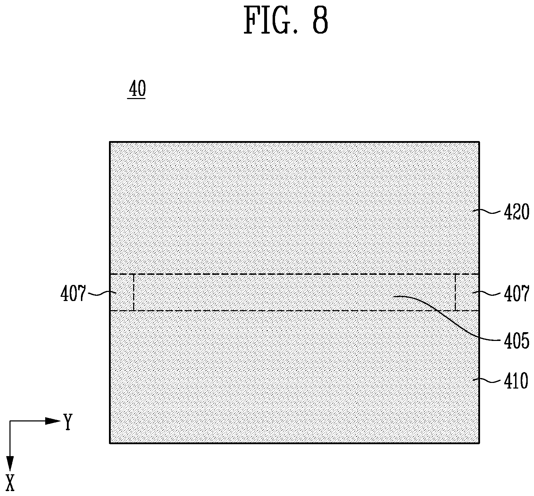

FIG. 8 shows an insulating member 40 according to one embodiment of the present disclosure.

An insulating material covering the outside of an electrode assembly 20 may be formed integrally. For example, when an insulating material is unfolded, the insulating material may be formed into a rectangular shape. The outside of an electrode assembly may be covered by folding a rectangular insulating material.

After an electrode assembly 20 is disposed on an integrally formed insulating member 40, each region of the insulating member 40 may be folded to cover the outside of the electrode assembly 20. Through this, the manufacturing process may be simplified, and the manufacturing costs may be reduced.

An insulating member 40 may include a bottom region 405 in contact with a bottom surface 250 of an electrode assembly 20, and a first region 410 and a second region 420 each positioned on both sides of the bottom region 405. A bottom region 405 may be positioned between a first region 410 and a second region 420.

A bottom region 405 may be formed at the center along the direction in which an insulating member 40 extends. A first region 410 and a second region 420 may be formed on both sides of a bottom region 405 along the direction in which an insulating member 40 extends.

Referring to FIG. 8, an insulating member 40 may extend along the X-axis direction. A bottom region 405 may be formed at the center of at insulating member 40, and a first region 410 and a second region 420 may each be formed on both sides.

Meanwhile, an insulating member 40 may further include a third region 407. A third region 407 may be a part of a bottom region 405. A third region 407 may be a region of the bottom region 405 positioned outside ah electrode assembly 20 along the direction in which a lead portion 25 protrudes from an electrode assembly 20.

An electrode assembly 20 may be in contact with a part of a bottom region 405. At this time, a lead portion 25 may protrude along the Y-axis direction, and a part of the bottom region 405 positioned on the outside of the electrode assembly 20 along the direction in which the lead portion 25 protrudes may be a third region 407.

Referring to FIG. 8, a lead portion 25 may protrude along the Y-axis direction, and a third region 407 may be formed outside a bottom region 405. A third region 407 may be folded upward and attached to a lead blocking portion 30.

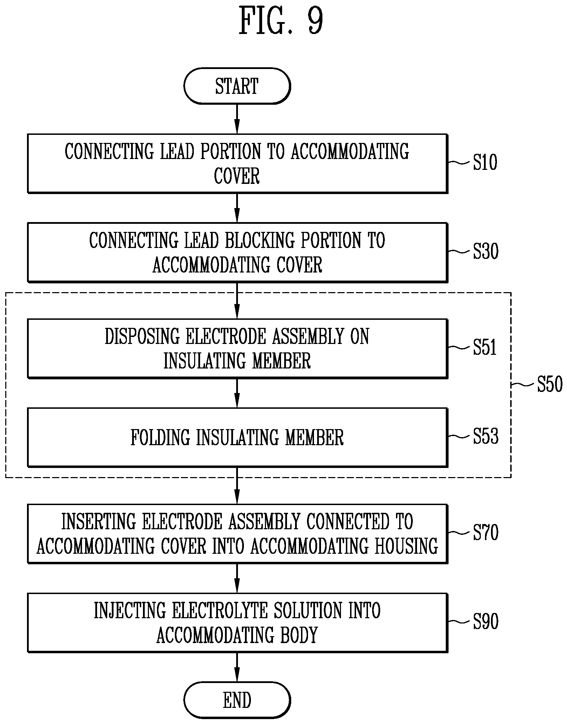

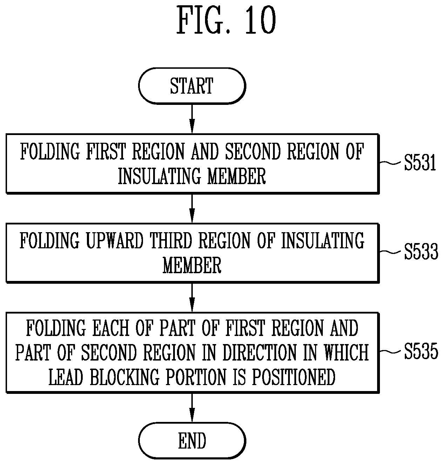

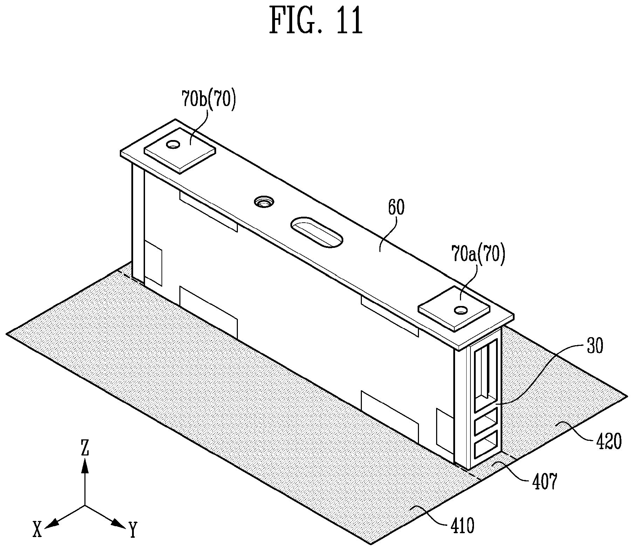

FIGS. 9 and 10 show flowcharts of a manufacturing method of a battery cell 100 according to one embodiment of the present disclosure; and FIGS. 11 to 13 schematically show an insulating member 40 covering an electrode assembly 20 according to one embodiment of the present disclosure.

Hereinafter, a manufacturing method of a battery cell 100 will be described with reference to FIGS. 9 to 13.

The manufacturing method of the battery cell 100 of the present disclosure includes: allowing the accommodating cover 60 to cover one surface of the electrode assembly 20 and connecting the lead portion 25 to the accommodating cover 60 (S10); covering the lead portion 25 and connecting the lead blocking portion 30 to the accommodating cover 60 (S30); covering the outside of the electrode assembly 20 with an insulating member 40 (S50); and inserting the electrode assembly 20 connected to the accommodating cover 60 into the accommodating body 50 through the opening 55 (S70).

Referring to FIG. 9, in the manufacturing method of the present disclosure, after connecting the lead portion 25 to the accommodating cover 60 (S10), connecting the lead blocking portion 30 to the accommodating cover 60 (S30); covering the outside of the electrode assembly 20 with an insulating member 40 (S50); and inserting the electrode assembly 20 connected to the accommodating cover 60 into the accommodating body 50 through the opening 55 (S70) may be sequentially carried out.

In addition, the covering the outside of the electrode assembly 20 with an insulating member 40 (S50) may include: disposing an electrode assembly 20 on an insulating member 40 (S51); and folding the insulating member 40 along a direction perpendicular to the direction in which the lead portion 25 protrudes from the electrode assembly 20 (S53).

In the manufacturing method of the present disclosure, after the disposing an electrode assembly 20 on an insulating member 40 (S51), folding the insulating member 40 along a direction perpendicular to the direction in which the lead portion 25 protrudes from the electrode assembly 20 (S53) may be carried out.

The folding the insulating member 40 (S53) may include: folding a first region 410 and a second region 420 of the insulating member 40, each positioned on both sides of a bottom region 405 of the insulating member 40 in contact with the bottom surface 250 of the electrode assembly 20, along a direction perpendicular to the direction in which the lead portion 25 protrudes (S531); folding upward a third region 407 in the bottom region 405 of the insulating member 40 positioned outside the electrode assembly 20 along a direction in which the lead portion 25 protrudes from the electrode assembly 20 (S533); and folding each of a part of the first region 410 and a part of the second region 420 in the direction in which the lead blocking portion 30 is positioned (S535).

Referring to FIG. 10, in the present disclosure, folding a first region 410 and a second region 420 (S531) may be first carried out. A first region 410 and a second region 420 may be folded in a direction perpendicular to the direction in which a lead portion 25 protrudes.

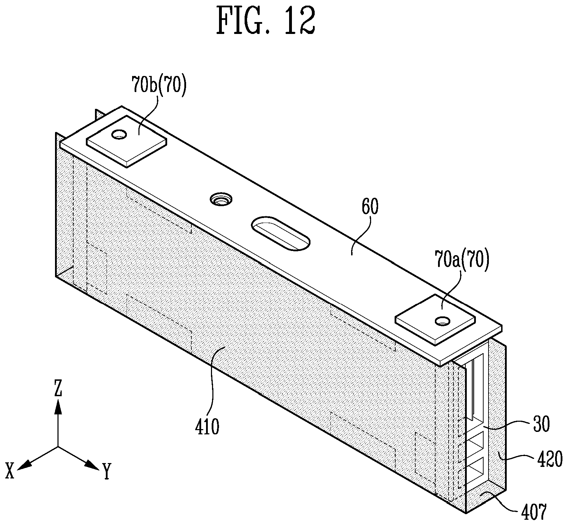

Referring to FIGS. 11 and 12, after an electrode assembly 20 is disposed on a bottom region 405, a first region 410 and a second region 420 may fold an insulating member 40 along a direction perpendicular to the direction in which a lead portion 25 protrudes. In other words, a first region 410 and a second region 420 may be folded along the X-axis direction. Through this, a first region 410 may cover a third surface 230, and a second region 420 may cover a fourth surface 240.

Next, in the manufacturing method of the present disclosure, folding a third region 407 upward (S533) may be carried out. A third region 407, which is a region of a bottom region 405 where an electrode assembly 20 is not positioned, may be folded upward. A third region 407 may be folded upward to cover the outside of a lead blocking portion 30.

Thereafter, in the manufacturing method of the present disclosure, folding each of a part of a first region 410 and a part of a second region 420 in the direction in which a lead blocking portion 30 is positioned (S535) may be carried out. Through this, an insulating member 40 may cover the outside of a lead blocking portion 30 and the outside of an electrode assembly 20.

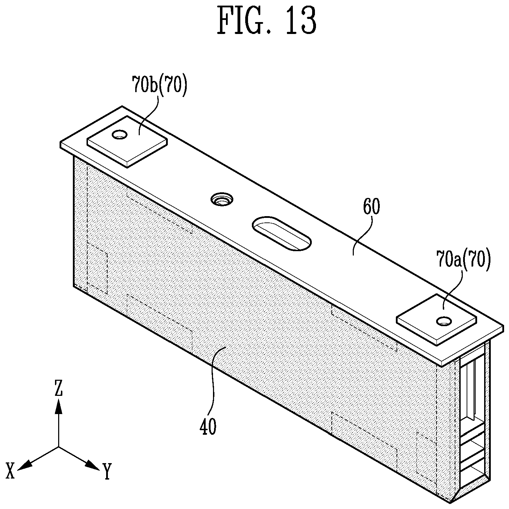

Referring to FIG. 13, a third surface 230 and a fourth surface 240 may be covered by an insulating member 40. In addition, a lead blocking portion 30 each positioned on a first surface 210 and a second surface 220 may be covered by an insulating member 40. Furthermore, in the process where an integrally formed insulating member 40 folds an electrode assembly 20, the insulating member 40 may overlap, thereby improving the electric stability of the battery cell.

In the manufacturing method of the present disclosure, after covering the outside of an electrode assembly 20 with an insulating member 40 (S50), inserting an electrode assembly 20 into an accommodating body 50 through an opening 55 (S70) may be carried out. An electrode assembly 20 may be inserted into an accommodating body 50, and an accommodating cover 60 and the accommodating body 50 may be coupled.

Meanwhile, the present disclosure may further include injecting an electrolyte solution into the accommodating body 50 through an injection hole 65 penetrating the accommodating cover 60 (S90). An electrolyte solution may be injected into an accommodating body 50 through an injection hole 65. An electrode assembly 20 may be immersed in an electrolyte solution accommodated in the accommodating body 50.

The present disclosure may be modified and implemented in various forms, and its scope is not limited to the embodiments described above. The content described above is merely an example of applying the principles of the present disclosure, and other configurations may be further included without departing from the scope of the present invention.

## Claims

1. A battery cell comprising:
an electrode assembly including a first electrode and a second electrode having a potential different from the first electrode;
an accommodating body including an opening formed by opening one surface and accommodating the electrode assembly therein;
an accommodating cover coupled with the opening to cover the electrode assembly;
a lead portion formed at one end of each of the first electrode and the second electrode to electrically connect the electrode assembly to the outside;
a lead blocking portion positioned between the electrode assembly and the accommodating body and blocking contact between the lead portion and the accommodating body; and
an insulating member covering the outside of the electrode assembly.

2. The battery cell according to claim 1, wherein the electrode assembly includes: an upper surface facing the opening; a bottom surface formed at a position opposite to the upper surface; a first surface and a second surface facing in a direction in which the lead portion protrudes between the upper surface and the bottom surface; and a third surface and a fourth surface between the first surface and the second surface.

3. The battery cell according to any one of the preceding claims, wherein the lead portion protrudes from each of the first surface and the second surface.

4. The battery cell according to claim 2, wherein the lead blocking portion is positioned between the first surface and the accommodating body and between the second surface and the accommodating body.

5. The battery cell according to any one of the preceding claims, wherein the lead blocking portion includes a through-hole formed by penetrating along a direction in which the lead portion protrudes from the electrode assembly.

6. The battery cell according to claim 5, wherein the through-hole is formed at a position corresponding to the lead portion.

7. The battery cell according to any one of the preceding claims, wherein the thickness of the lead portion along the direction in which the lead portion protrudes from the electrode assembly is greater than or equal to the length of the lead portion.

8. The battery cell according to any one of the preceding claims, wherein the lead blocking portion is formed of an insulating material.

9. The battery cell according to claim 2, wherein the insulating member covers the third surface, the fourth surface, and the bottom surface.

10. The battery cell according to claim 9, wherein the insulating member covers the outside of the lead blocking portion positioned on each of the first surface and the second surface.

11. The battery cell according to claim 10, wherein the insulating member is formed of an insulating material.

12. A manufacturing method of a battery cell including an electrode assembly including a first electrode and a second electrode having a potential different from the first electrode; an accommodating body including an opening formed by opening one surface and accommodating the electrode assembly therein; an accommodating cover coupled with the opening to cover the electrode assembly; and a lead portion formed at one end of each of the first electrode and the second electrode to electrically connect the electrode assembly to the outside, comprising:
allowing the accommodating cover to cover one surface of the electrode assembly and connecting the lead portion to the accommodating cover;
covering the lead portion and connecting the lead blocking portion to the accommodating cover;
covering the outside of the electrode assembly with an insulating member; and
inserting the electrode assembly connected to the accommodating cover into the accommodating body through the opening.

13. The manufacturing method according to claim 12, wherein the covering the outside of the electrode assembly with an insulating member includes:
disposing an electrode assembly on an insulating member; and
folding the insulating member along a direction perpendicular to the direction in which the lead portion protrudes from the electrode assembly.

14. The manufacturing method according to claim 13, wherein the folding the insulating member includes:
folding a first region and a second region of the insulating member, each positioned on both sides of a bottom region of the insulating member in contact with the bottom surface of the electrode assembly, along a direction perpendicular to the direction in which the lead portion protrudes;
folding upward a third region in the bottom region of the insulating member positioned outside the electrode assembly along a direction in which the lead portion protrudes from the electrode assembly; and
folding each of a part of the first region and a part of the second region in the direction in which the lead blocking portion is positioned.

15. The manufacturing method according to claim 12, further comprising:
injecting an electrolyte solution into the accommodating body through an injection hole penetrating the accommodating cover.
